# EUROPEAN PATENT APPLICATION

(11) **EP 3 104 273 A1**
(43) Date of publication of application: **14.12.2016**
(21) Application number: 15305906.8
(22) Date of filing: 12.06.2015
(51) Int. Cl.: G06F 9/455, G06F 9/445

(54) **METHOD FOR PROCESSING A COMPUTER APPLICATION BY A COMPUTING DEVICE AND RELATED DEVICES**

(71) Applicant: ALCATEL LUCENT, 92100 Boulogne-Billancourt (FR)
(72) Inventor: VAN BROECK, Sigurd, 2018 Antwerpen (BE); VERZIJP, Nico, 2018 Antwerpen (BE)
(74) Representative: ALU Antw Patent Attorneys

(57) **Abstract**

The present invention relates to a method, and related devices for processing a Computer Application by a computing device, said Computer Application comprising at least one script, where each script comprises at least one portion. The related method comprises the step of processing the at least one script by the computing device. The method further comprises the steps of processing, by said computing device, each portion of the at least one script of the Computer Application and the step of obtaining a set of profile hints corresponding to said Computer Application by said computing device where the set of profile hints comprises an indication on a kind of processing best suited for each portion of a script of said Computer Application based on the frequency of use of each portion of said at least one script during said processing of said Computer Application and the step of determining, by the computing device, a kind of processing of said each portion of said at least one script of said Computer Application based on said set of profile hints corresponding to said Computer Application.

## Description

### FIELD OF THE INVENTION

The present invention relates to the processing of a Computer Application by a computing device.

### TECHNICAL BACKGROUND OF THE INVENTION

Computer applications are processed by a computing device. The present invention relates to such computer applications comprising at least one script. Basically, such script is built up of at least one portion where the processing of such at least one portion is performed by means of a scripting engine of the computing device. The scripting engine of the computing device CD processes subsequently each portion of said at least one script of the application.

Computer Applications, such as web applications may comprise interactive Web contents and present the large majority of the Web pages available today on the Internet. Web applications in particular, may include a combination of multiple individual Web resources like HTML, CSS, JavaScript (ECMAScript), SVG, images, videos and other files. Computer Applications such as for instance a web application may comprise resources such as scripts like for instance a JavaScript. Such resources are typically processed at run-time, which processing may include interpreting or Just-In-Time (JIT) compiling such script by means of a scripting engine such as a JavaScript engine in case of JavaScript script. Web applications may range from simple Web pages to powerful Computer Applications.

Alternatively, such Computer Applications may include macro scripting batch file applications running on a local machine using e. g. VBScript or ActionScript or Python, scripted services running on server machines using e. g. PHP or Perl or Ruby, hybrid applications consisting in part of compiled machine code and in part of scripted code using e. g. Lisp or LUA or LSL.

The processing of such resources, i.e. the interpretation or compilation of a script and their respective portions such as JavaScript script files by e.g. Webkit is performed in multiple, e.g. three or four stages, each stage called a tier. A tier stands for the kind of processing that is performed on a portion of a script of the Computer Application.

Each tier interprets or compiles a portion of a script into byte code with varying levels of optimization. A number of tiers, e.g. three or four are available: the first tier being a interpreter tier, for interpreting a portion of a script, a second tier configured to perform compiling of a portion of a script with additional optimization, a third tier configured to perform compiling with increased optimization and a fourth or further tier configured to perform compiling with high or respectively highest optimization. The first execution of any portion always starts in the first, i.e. the interpreter tier. As soon as any statement in the portion of the script executes e.g. more than 100 times, or the portion is invoked e.g. more than 6 times (whichever comes first), execution is diverted into code compiled by the second tier. This eliminates some of the interpreter's overhead but lacks any serious compiler optimizations. Once any statement executes e.g. more than 1000 times in second tier or the second tier is invoked e.g. more than 66 times, the execution is diverted to the third tier.

Hence, the kind of processing of a portion of the script depends on the frequency on which a portion of a script of a Computer Application, such as a JavaScript function, is used. Not frequently used code is interpreted by the first tier, tier 1 while very frequently used code is eventually compiled with the Fourth Tier compiler. As soon as a predefined threshold is reached, the code gets compiled or recompiled with the next tier. Interpreting of a very infrequently used web resource by tier 1 is less resource consuming compared to compiling such a web resource by means of a highest, third or fourth tier.

Such three or four-tier architecture is e. g. explained in article: *"Surfin' Safari": Introducing the WebKit FTL JIT Posted by Filip Pizlo* on *Tuesday, May 13th,* 2014 *at 2:52 pm at https:*//*www.webkit.org*/*blog*/*3362*/*introducing-the-webkit-ftl-jit*/*"*

Before the threshold for compilation or recompilation in a next tier is reached, the Computer Application runs suboptimal. The tiered compilation therefore requires a certain amount of time before the most optimal code is reached.

The second, third and fourth tier recompilations also require extra computing resources and device power from the computing device on which the Computer Application is running, compared to resources interpreted in tier 1, and should therefore be performed only for frequently used code. For computing devices with limited resources like smartphones or smart watches, this may deplete the battery faster.

### SUMMARY OF THE INVENTION

An objective of embodiments of the present invention is to provide with a method for processing a Computer Application by a computing device and related devices of the above known type but wherein the processing of such Computer Application is performed more efficiently with respect to use of processing resources (such as processor capacity, memory and consumed power) resulting in a faster processing of the Computer Application given a conservative use of processing resources.

According to the invention, this object is achieved by the method described in claim 1, the computing device as described in claim 8, and the computer program product as described in claim 15.

Indeed, due to the fact that a computing device obtains a set of profile hints corresponding to the Computer Application that is to be, or is currently being processed, where the set of profile hints comprising an indication on the frequency of use of each portion of said at least one script during said processing of said Computer Application, the computing device is able to immediately determine a kind of processing of said each portion of said at least one script of said Computer Application based on said set of profile hints corresponding to said Computer Application.

As the computing device, at obtaining of the set of profile hints that corresponds to the Computer Application is immediately aware of an indication on the frequency of use of each script and respective portion thereof during the processing of the Computer Application, the computing device is immediately enabled to determine the kind of processing of each portion of said at least one script of said Computer Application and immediately able to process each portion of said at least one script of said Computer Application in the appropriate manner. The kind of processing may include interpreting a portion of script by means of tier 1, compiling a further portion of a script by means of a further tier, e.g. tier 2, for compiling a still further portion of said script with a higher optimization by means of still a further tier, e.g. tier 3 or compiling a portion of the script with a highest degree of optimization by means of another further tier, e.g. tier 4.

In case the computing device CD in advance of processing a Computer Application is aware of which kind of processing is most appropriate for each portion of said at least one script of said Computer Application, i.e. interpret or compile using a said degree of optimization, the processing of a web application can be performed in a more resource efficient manner.

Such script may be a JavaScript script, a VBScript script, a Python script, a PHP script, a Lisp script, a LUA script or any other script using any other scripting language.

Each script in turn is built up of portions, where each portion may be a function or sub-function of the script that can be processed separately by a processor i.e. a scripting engine of such computing device. Such scripting engine may be a Python engine, an ActionScript engine, a PHP engine, a Perl engine or any other suitable scripting engine for said scripting language.

The kind of processing that is determined based on the set of profile hints in other words may be the determining of the tier in which each portion of the script is treated.

A different set of profile hints may be generated for different form-factors of the computing device as a single computer application will most probably behave differently on a mobile phone as on a desktop computer. Hence, the set of profile hints may also be different for the different device form-factors.

This invention aims to present a general solution that can further increase the performance of processing Computer Applications that can be adopted by all computing device vendors and Delivery Appliances, that is resource-friendly for end user devices, and that is independent from the target machine.

Another characteristic feature of the present invention is described in claim 2 and claim 9 and claim 12.

The Computer Application may be a web application and in case the Computer Application is a web application, the web application may be obtained by said computing device from a web server, where the web server maintains the Computer Application comprising at least one script and where the web server is coupled to the computing device, for instance, over a content delivery network or other suitable communications network. Such a web application may be a JavaScript application, or a PHP application, or a VBScript application, or a Perl application, or any other scripted application.

Another characteristic feature of the present invention is described in claim 3 and claim 10.

The script of the Computer Application may be JavaScript script.

Still another characteristic feature of the present invention is described in claim 4 and claim 11.

The set of profile hints corresponding to a Computer Application is generated in real time during the processing of each portion of a script of the Computer Application for the first time by the computing device itself.

In cases where no set of Profile Hints is provided upfront to the computing device or is available, at the computing device, at time of processing such a Computer Application, the computing device must deploy the well known threshold strategy during the first time of processing such a Computer Application. During this first time processing, the set of profile hints corresponding to a Computer Application is generated by means of a processor i.e. the scripting engine of the computing device in real time during the processing of each portion of a script of said Computer Application for the first time. Afterwards, after processing such an Computer Application for the first time, the set of profile hints corresponding to the processed Computer Application may be stored and be used for processing this Computer Application the second time. At the second time of processing such Computer Application using the generated set of profile hints corresponding to the processed Computer Application, the Computer Application can be processed more efficient.

Alternatively, or in addition, the computing device then may forward the obtained set of profile hints to an intermediary device. The intermediary device may obtain more than one set of Profile Hints from various computing devices and subsequently combine these into a consolidated set of Profile Hints.

The intermediate device may for instance be a web server for providing web applications to a requesting computing device.

This set of profile Hints corresponding to the Computer Application based on one or more computing device may be applied for forwarding to a further computing device processing this Computer Application.

Additionally, the profile hints may be coupled to user profiles or user profile categories. As such, the user profile or user profile categories can be used to select a profile hint between a set of profile hints previously obtained from a substantial set of users that is representative for the current user or user's profile.

Another characteristic feature of the present invention is described in claim 13.

The set of profile hints corresponding to said Computer Application may be generated by a web server based on processing each portion of said at least one script during said processing of said Computer Application by said web server.

The set of profile hints information corresponding to a Computer Application is generated before delivering said Computer Application and/or processing the Computer Application at a web server coupled to the computing device CD over a communications network CDN.

The set of Profile Hints corresponding to a Computer Application, as for instance standard JavaScript script, is generated upfront with new tools or by using or extending existing profiling tools like e. g. the Google Closure Tools, the Google Chrome Developers Tools, or the Firefox Developer Tools. The set of Profile Hints may for instance also be generated from manual tests performed by test users, and/or from automated tests performed on a headless browser.

Another characteristic feature of the present invention is described in claim 5 and claim 14.

The set of profile hints corresponding to said Computer Application may be generated by a remote computing device based on processing each portion of said at least one script during said processing of said Computer Application by said remote computing device.

The set of profile hints information corresponding to a Computer Application is generated before delivering said Computer Application and/or processing the Computer Application at a remote computing device being included in any network element coupled to the computing device CD over a communications network CDN.

The set of Profile Hints corresponding to a Computer Application, as for instance standard JavaScript script, is generated upfront with new tools or by using or extending existing profiling tools like e. g. the Google Closure Tools, the Google Chrome Developers Tools, or the Firefox Developer Tools. The set of Profile Hints may for instance also be generated from manual tests performed by test users, and/or from automated tests performed on a headless browser

Such headless browser may also run pro-actively or in real-time on a CDN server (e. g. intermediary or origin).

The set of profile hints corresponding to said Computer Application may be generated by means of such a headless browser or during manual tests based on the processing of each portion of said at least one script during said processing of the Computer Application.

Still another characteristic feature of the present invention is described in claim 6.

The set of profile hints corresponding to said Computer Application comprises for each portion of the at least one script of the Computer Application a value indicating the kind of processing of said portion of the at least one script of the Computer Application.

The set of profile hints corresponding to said Computer Application comprises for each portion of the at least one script of the Computer Application one or more values indicating the kind of processing of each portion of the at least one script of the Computer Application or in other words, the value included in the set of profile hints corresponding to the Computer Application may indicate the tier for processing each portion of the at least one script of the Computer Application by the computing device.

Still another characteristic feature of the present invention is described in claim 7.
The set of profile hints corresponding to said Computer Application may comprise an annotation to each portion of the at least one script of the Computer Application, each said annotation indicating said kind of processing of said portion of said at least one script.

Example of such an annotation provided as a comment in the contents of a file "datedisplay.html":

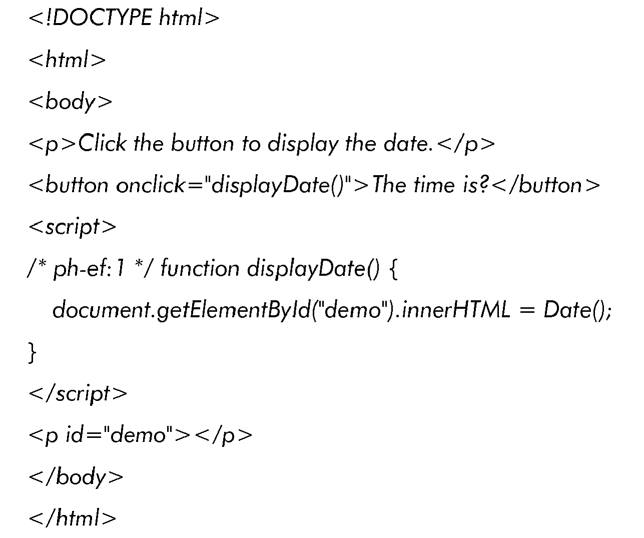

In the example above, the displayDate function "function displayDate() {}" inside the script section "<script></script>" of said file "datedisplay.html" is annotated with the comment "/* ph-ef:1 */", said comment referring to a profile hint "ph" for "-" execution frequency "ef" with a value of ":" one "1".

Alternatively, the set of profile hints corresponding to said Computer Application may be provided as a separate resource file.

Example of such a separate resource file "datedisplay.ph-ef" for said file "datedisplay.html":

### displayDate:1

In the example above, the displayDate function "displayDate" of said file "datedisplay.ph-ef" in the script section "<script></script>" of the corresponding file "datedisplay.html" is marked with a profile hint for execution frequency "ph-ef" with a value of ":" one "1".

In the above examples, a value of one "1" hints the scripting engine that the function displayDate is called infrequently. The scripting engine will therefore not compile but interpret the code. If the hint would have a value of e. g. 1000, the scripting engine would be hinted to immediately compile the code for e.g. tier 3. The values that a hint can have may simply refer to the frequency of use or can be standardized.

Additionally, multiple values can be provided for a single portion of a script where e.g. the first value refers to frequency of execution and the second value refers to frequency of invocation. Further additional values may refer to e.g. device form factors, or user profile categories. The server may choose to minimize the profile hints before sending it to the user's device by removing the values not applicable for the current user or current user device based on the current user's profile or profile category and the current user's device form factor.

The effects and advantages of the apparatus and systems according to embodiments of the present invention are substantially the same, *mutatis mutandis,* as those of the corresponding methods according to embodiments of the present inventions.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
FIG. 1 represents the functional structure of a Computing device CD configured to process a Computer Application; and
FIG. 2 represents a functional structure of a system configured to process a web application, said system comprising a Computing device CD' configured to process the web application and a Web server CDS, configured to provide a computing device CD' with a web application; and
FIG.3 represents the functional structure of a Computing device CD' configured to process a web application; and
FIG. 4 represents the functional structure of a Web server CDS, configured to provide a computing device CD' with a web application.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

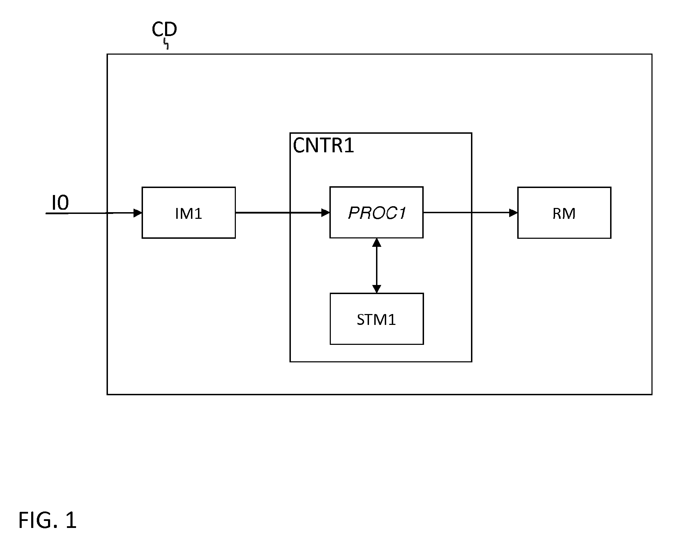

In the following paragraphs, referring to the drawing in FIG.1, an implementation of the computing device CD configured to process a Computer Application according to a first embodiment of the present invention is described. In the first paragraph, all relevant functional means of the mentioned computing device CD as presented in FIG.1 are described followed by a description of all interconnections.

In the succeeding paragraph the actual execution of the system is described.

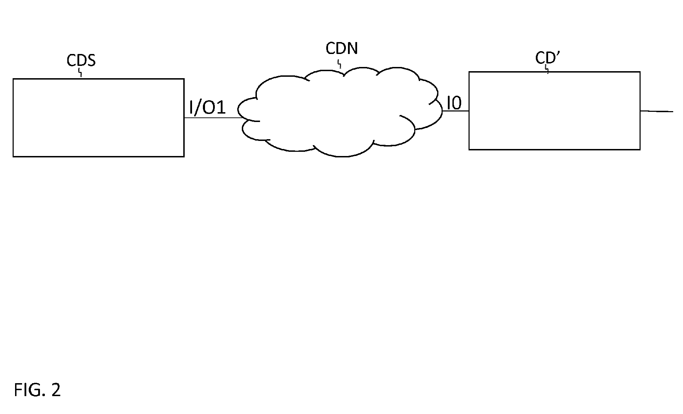

Subsequently, referring to the drawing in FIG.2, an implementation of a system configured to process a web application according to a second embodiment of the present invention is described.

In a subsequent paragraph, the elements of the meant system in Fig. 2 are described, and in a further paragraph, all connections between mentioned elements are defined.

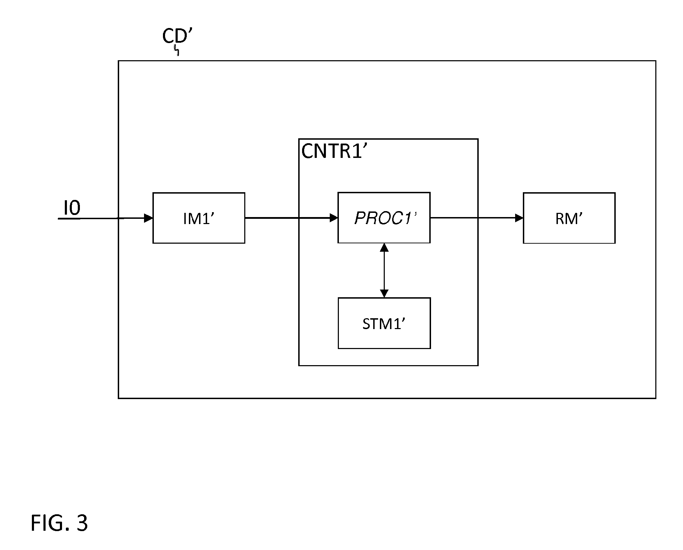

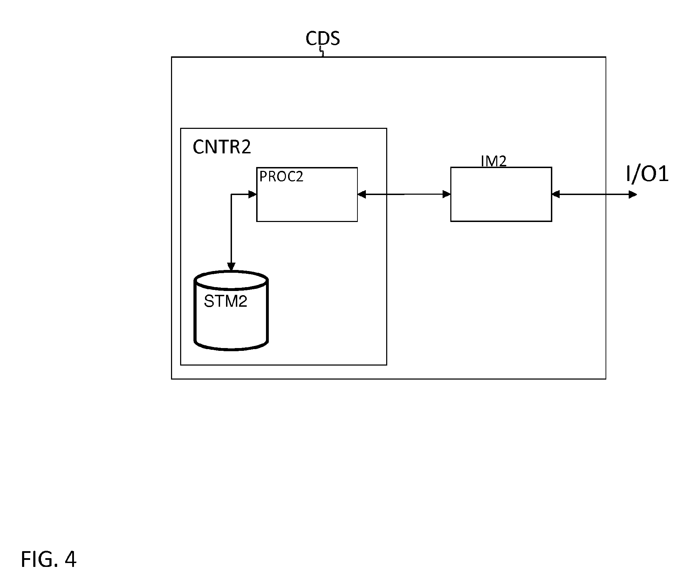

Subsequently, all relevant functional means of the mentioned computing device CD' as presented in FIG. 3 and the web server as presented in FIG. 4 are described followed by a description of all interconnections.

In the succeeding paragraph the actual execution of the present invention according to a second embodiment is described.

An essential element of the first embodiment is the computing device CD being a standalone device as presented in FIG.1.

The Computing device CD is configured to process a Computer Application where the Computer Application comprises at least one script and wherein each script comprises at least one portion.

The computing device CD comprises a controller CNTR1 that is configured to control the operation of the computing device CD. In an embodiment, the controller CNTR1 comprises a programmable computer PROC1 comprising a processor, e. g. a microprocessor, and a storage element STM1, e.g. semiconductor memory.

In an exemplary embodiment, the computing device CD may be a server computer, a personal computer, a handheld computer such as a PDA or cell phone, etc.

The computing device CD is configured to, by means of the controller CNTR1, process, each portion of said at least one script of said Computer Application; and
to obtain a set of profile hints corresponding to said Computer Application, said set of profile hints comprising an indication on the frequency of use of each portion of said at least one script during said processing of said Computer Application); and
to determine a kind of processing of said each portion of said at least one script of said Computer Application based on said set of profile hints corresponding to said Computer Application.

The computing device CD optionally may comprise an interfacing means IM configured to communicate with a user interface or to exchange information with peripherals like a keyboard, mouse or even another computing device. The computing device optionally may comprise a rendering means RM being a display optionally with speakers, which rendering means RM is configured to render pictures, video or a combination thereof optionally in combination with sound.

The interfacing means IM is coupled with an output to an input of the controller CNTR1. The controller CNTR1 further is coupled to the rendering means RM.

The controller CNTR1 further comprises a processor PROC1 that is coupled to the storage means STM1. The processor PROC1 being a scripting engine including one of the following: a Python engine, an ActionScript engine, a PHP engine, a Perl engine or any other suitable scripting engine.

In order to explain the present invention first it is assumed that that the processing device is going to processes or run an Computer Application A comprising a first and a second script being a JavaScript script.

The first script comprises portions P1,...., P6 and the second script in turn comprises portions P7,...., P16 each being sub-function of the script.

The Computer Application A may be installed and be available already at the storage means which Computer Application may be obtained from a disk, USB stick or other storage means Computer Application A alternatively may be obtained from an application server over a communications connection.

Alternatively, Computer Application A may be created by the user of the computing device by means of typing the code or alternatively by means copying the one or more parts of the code from another script and subsequently stored at the storage means STM1.

The computing device CD, at processing Computer Application A, i.e. the interpretation or compilation of the Scripts by means of the processor PROC1, i.e. the scripting engine, is done in 4 stages, called tiers, and depends on the frequency on which a portion of such script is used. Not frequently used code is interpreted by tier 1 while very frequently used code is compiled with the 4th Tier compiler. As soon as a predefined threshold is reached, the code gets compiled or recompiled with the next tier. As before, the threshold for compilation or recompilation in a next tier is reached, the Computer Application runs suboptimal. The tiered compilation therefore requires a certain amount of time before the most optimal code is reached.

The 2^{nd}, 3^{rd} , and 4^{th} tier recompilations also require extra computing resources and device power from the computing device on which the Computer Application is running.

In an embodiment of the present invention a set of profile hints corresponding to said Computer Application is obtained, where this set of profile hints comprises an indication on the frequency of use of each portion of said at least one script during said processing of said Computer Application. This set of profile hints is preinstalled or prestored at the storage means STM1 or alternatively obtained from a local device like a hard disk or USB disk. Alternatively, Computer Application A may be created by the user of the computing device by means of typing the code and subsequently stored at the storage means STM1.

The set of profile hints indicates respectively that portion P1 is to be processed by means of tier 3, portion P2 is not processed at all, portion 3 processed by means of tier 2, etc. as indicated in the below table, table 1, wherein, the execution frequency coincides with the compilation tiers of the controller CNTR1 and the script portions correspond with the function names. In an alternative embodiment, the function name may be replaced by script line numbers. Note that row named "Portion" has no functional meaning but has been added to clarify this embodiment.

**Table 1**

| Portion | Function name | Execution frequency |
|---|---|---|
| Portion P1 | Function_1 | 3 |
| Portion P2 | Function_2 | 0 |
| Portion P3 | Function_3 | 2 |
| ... | ... | |
| Portion P6 | Function_6 | 4 |
| Portion P7 | Function_7 | 1 |
| .... | .... | |
| Portion P16 | Function_16 | 3 |

Using the information supplied, i.e. the set of profile hints related to Computer Application A, the controller CNTR1 may immediately push the appropriate interpreter function (tier 1) or compiler function (tier2, tier 3, tier 4) for each portion of a script resulting in a faster and more efficient code processing of each of the portions of Computer Application A which will result in the code running faster.

During compilation (in background), the normal application execution is performed (in foreground) with highest priority. However, as soon as a portion is compiled (in background), it is immediately used (in foreground) using the stack replacement technology.

A first essential element of the second embodiment is the computing device CD' being an internet connected device as presented in FIG.3. The Computing device CD' is configured to process a web application where the Computer Application comprises at least one script and wherein each script comprises at least one portion. A second essential element of an embodiment of the present invention is a web server CDS being configured to provide the computing device CD' with a web application comprising at least one script. The web server CDS further is configured to provide the computing device CD' with a set of profile hints corresponding to the web application, where the set of profile hints comprising an indication on the frequency of use of each portion of said at least one script during said processing of said Computer Application and hence with an indication of the kind of processing which is most appropriate for each portion of a script of the Computer Application.

The web server CDS is coupled to the computing device CD' over a communications network CDN e.g. being implemented by means of a content delivery network, a personal Bluetooth network, a private LAN, or a VPN or any other suitable alternative communications network.

The Computing device CD' is configured to process a web application where the web application comprises at least one script and wherein each script comprises at least one portion.

The computing device CD' as presented in FIG. 3, comprises a similar functional structure as the computing device CD. The computing device CD' also comprises a controller CNTR1' that is configured to control the operation of the computing device CD'. In an embodiment, the controller CNTR1' comprises a programmable computer PROC1' comprising a processor, e. g. a microprocessor, and a storage element STM1', e.g. semiconductor memory.

The processor PROC1' including a scripting engine including one of the following: a Python engine, an ActionScript engine, a PHP engine, a Perl engine or any other suitable scripting engine.

In an exemplary embodiment, the computing device CD' may be a server computer, a personal computer, a handheld computer such as a PDA or cell phone, etc.

The computing device CD' is configured to, by means of the controller CNTR1', process, each portion of said at least one script of said web application; and
- to obtain a set of profile hints corresponding to said web application, said set of profile hints comprising an indication on the frequency of use of each portion of said at least one script during said processing of said web application and hence with an indication of the kind of processing which is most appropriate for each portion of a script of the web application, and
- to determine a kind of processing of said each portion of said at least one script of said Computer Application based on said set of profile hints corresponding to said Computer Application.

The computing device CD' comprises an interfacing means IM configured to communicate with a user interface or to exchange information with a peripherals like a keyboard, mouse or with another computing device such as web server CDS in this embodiment of the present invention. The computing device CD' optionally may comprise a rendering means RM' being a display optionally with speakers, that is configured to render pictures, video or a combination thereof optionally in combination with sound.

The interfacing means IM' has an input-terminal that is at the same time an input-terminal I0' of the computing device CD' and further is coupled with an output to an input of the controller CNTR1'. The controller CNTR1' further is coupled to the rendering means RM'. The controller CNTR1' further comprises a processor PROC1' that is coupled to the storage means STM1'.

The Web server CDS is configured to provide a computing device CD' with a web application over communications network CDN. Such a web application comprises at least one script and where each script is built up of portions such as (sub-) functions of the (JavaScript) script. Such web applications may be stored at a local data storage STM2 incorporated in the web server CDS or be a co-located or remote data storage as a distinct network element coupled to the server device CDS over any suitable communications network.

The web server CDS comprises a controller CNTR2 that is configured to control the operation of the web server CDS. In an embodiment, the controller CNTR2 comprises a programmable computer PROC2 comprising a processor, e. g. a microprocessor, and a storage element STM2, e.g. semiconductor memory.

In an exemplary embodiment, the web server CDs may be a server computer, a cloud service, a local service, another local application, an application store, etc.

The web server CDS is configured to, by means of the controller CNTR2, to provide the computing device CD' with a set of profile hints corresponding to the to be processed Computer Application, where the set of profile hints comprises an indication on the frequency of use of each portion of said at least one script during said processing of said Computer Application and hence with an indication of the kind of processing which is most appropriate for each portion of a script of the Computer Application.

The controller CNTR2 of the Web server CDS additionally may be configured to generate the set of profile hints corresponding to said Computer Application based on processing each portion of said at least one script during processing of said Computer Application.

Any web application available at the web server may be stored at a local data storage STM2 incorporated in the web server CDS or be a co-located or remote data storage as a distinct network element coupled to the server device CDS over any suitable communications network.

Alternatively, the set of profile hints corresponding to a web application may be generated by means of a distinct network element, an intermediate server, an access node, a gateway, etc.

The web server CDS additionally comprises an interfacing means IM2 configured to communicate with another computing device such computing device CD'. The controller CNTR2 of the web server CDS further is configured to forward a web applications and or a corresponding set of profile hints towards the connected computing device, such as device CD', where the forwarding optionally may be at request of the computing device CD'. Moreover, controller CNTR2 of web server CDS further is configured to receive a request for a web application and/or the corresponding set of profile hints from a connected computing device such as device CD'.

The interfacing means IM2 has an input-terminal that is at the same time an input/output-terminal I/O1 of web server CDS and further is coupled to the controller CNTR2. The controller CNTR2 further comprises a processor PROC2 that is coupled to the storage means STM2. The processor PROC2 comprising a scripting engine including one of the following: a Python engine, an ActionScript engine, a PHP engine, a Perl engine or any other suitable scripting engine.

In the succeeding paragraph the actual execution of the second embodiment of the present invention is described.

First, the further described web application B, is assumed to be a web application where such
Web applications may be a combination of multiple individual Web resources like HTML, CSS, JavaScript (ECMAScript), SVG, images, videos and other files. The JavaScript script portions are typically interpreted or compiled by the user agent's JavaScript engine, visual parts are rendered by the user agent's graphical engine for consumption by the end user. Web applications may range simple Web pages to powerful applications Cloud Management Systems, Operational Support Systems, Ticketing Systems, Enterprise Resource Management Systems, etc.

In order to explain the present invention first it is assumed that that the web server CDS has at least a web application B at its disposal for delivery to any computing device at request of the meant web application B by the computing device CD'. The meant web application B is stored at the storage means STM2 of the web server CDS.

Further it is assumed that application B comprises a first and a second script being a JavaScript script or be alternative a PHP, Perl, VBScript or LUA script.

The first script S1 comprises portions P1,...., P6 and the second script S2 in turn comprises portions P7,...., P16 each being a respective sub-function of the script.

Further, it is assumed that computing device CD' intends to execute web application B. Consequently, computing device CD' sends, by means of processor PROC1' of controller CNTR1' and via Interfacing means IM', a request for web application B towards the web server CDS. At receipt of the request for web application B by means of the Interfacing means IM1', where after Interfacing means IM1' forwards the request towards the controller CNTR2 of the web server CDS. Subsequently, processor PROC2 of controller CNTR2 fetches web application B from the associated data storage STM2 and forwards the fetched web application B, via the interfacing means IM2 towards the computing device CD'. Computing device CD' by means of interfacing means IM1' receives web application B and provides it to controller CNTR1' of the computing device CD'. Processor PROC1' of the controller CNTR1' starts processing application B, i.e. the interpretation or compilation of each subsequent portion of the respective scripts S1 and S2 of application B by means of the processor PROC1', i.e. by means of the scripting engine included in processing means PROC1'. The processing of the portions P1,..., P6 may be done in 4 stages, called tiers, and depends on the frequency on which a portion of such script is used. Not frequently used code is interpreted by tier 1 while very frequently used code is compiled with the 4th tier compiler. So, as soon as a predefined threshold is reached, the code gets compiled or recompiled with the next tier. As before the threshold is reached for compilation or recompilation in a next tier, the Computer Application runs suboptimal. The tiered compilation therefore requires a certain amount of time before the most optimal code is reached.

The 2^{nd}, 3^{rd}, and 4^{th} tier recompilations also require extra computing resources and device power from the computing device CD' on which the web application is running.

Hence, to render the processing of such an web application, e.g. web application B, more efficient, in an embodiment of the present invention a set of profile hints corresponding to said Computer Application is obtained by the computing device CD', where this set of profile hints comprises an indication on the frequency of use of each portion P1, ..., P6 and P7,..., P16 of said at least one script during said processing of said application.

This set of profile hints corresponding to application B is requested by means of the processor PROC1' of the controller CNTR1'. Consequently, computing device CD' sends, by means of processor PROC1' of controller CNTR1' and via Interfacing means IM1', a request for the set of profile hints corresponding to web application B towards the web server CDS. At receipt of the request for the set of profile hints corresponding to web application B by means of Interfacing means IM2, whereafter Interfacing means IM2 forwards the request towards the controller CNTR2 of the web server CDS. Subsequently, processor PROC2 of controller CNTR2 fetches the set of profile hints corresponding to web application B from the associated data storage STM2 and forwards the fetched set of profile hints corresponding to web application B, towards the computing device CD'. Computing device CD' by means of interfacing means IM1' receives web application B and provides it to controller CNTR1' of the computing device CD'. The set of profile hints corresponding to web application B indicates respectively that portion P1 is to be processed by means of tier 3, portion P2 is not processed at all, portion 3 processed by means of tier 2, etc. as indicated in below table wherein, the execution frequency coincides with the compilation tiers of the controller CNTR1'.

**Table 2**

| Portion | Function name | Execution frequency |
|---|---|---|
| Portion P1 | Function_1 | 3 |
| Portion P2 | Function_2 | 0 |
| Portion P3 | Function_3 | 2 |
| ... | ... | |
| Portion P6 | Function_6 | 4 |
| Portion P7 | Function_7 | 1 |
| .... | .... | |
| Portion P16 | Function_16 | 3 |

Finally, at receipt of the set of profile hints corresponding to web application B, processor PROC1', in particular the scripting engine of processor PROC1' applies the set of profile hints corresponding to web application B in the manner that Processor PROC1' of controller CNTR1' can immediately push the appropriate interpreter function (tier 1) or compiler function (tier2, tier 3, tier 4) for each portion of a script resulting in a faster and more efficient code processing of each of the portions of Computer Application A which will result in the code running faster.

Hence, portion P1 is processed by compiling portion P1 with increased optimization according to tier 3, portion 2 by not at all processing the portion, portion 3 by compiling portion P2 with additional optimization in according to tier 2, portion P6 by compiling portion P6 with highest optimization in according to tier 4, etc as is indicated in the above table 2.

It is to be noted that such a set of Profile Hints does not provide 100% correctness but provides with an improvement of processing so that a computing device CD' may still need to perform further threshold checks but can initially compile the code in a substantially improved manner.

In a further embodiment, each Profile Hint consists of a value indicating the frequency of use. In a further embodiment, each Profile Hint consists of a value from 1 to 4 where the value corresponds with the compilation tier.

In an alternative embodiment of the present invention, the set of Profile Hints may be transferred to the computing device CD as annotations to the JavaScript script.

In an alternative embodiment of the present invention, the set of Profile Hints may be a proprietary extension to the ECMAScript standard, subject as input for standardization in e.g. ECMA.

In a further embodiment, and for computer devices that do not (yet) comply with the ECMAScript proprietary or standardized extension, a dedicated service may remove or ignore any related information.

In a further embodiment, the dedicated Computer Application runs in the origin server, an intermediary or in the user computing device t. In a further embodiment, the intermediary is a Delivery Appliance. In a further embodiment, the dedicated service is a JavaScript resource (application or library).

In a further alternative embodiment, such a set of Profile Hints are provided in JavaScript comments or directives. In yet another alternative further embodiment, the set of Profile Hints is provided in an accompanying HTML resource or any other accompanying Web resource. In still a further embodiment, the accompanying Web resource provides links to JavaScript identifiers or fragments. In a further embodiment, such JavaScript fragments can be line numbers, file sections, special section identifiers, or any other uniquely identifiable file fragment.

In an alternative embodiment, the Profile Hints are provided over a communication channel like e.g. XHR, WebSockets, or WebRTC using a dedicated JavaScript library, subject as input for standardization in e.g. W3C. In an alternative further embodiment, the user agent provides hooks into the compilation process allowing Service Workers to provide the Profile Hints where a Service Worker refers to a 3^{rd} party application that, in this case, is able to collect e. g. the "frequency of use" of each portions of the script from the compilation process so that the Service Worker may assemble the set of Profile Hints corresponding to the script

Furthermore, in order to explain the generation of a set of profile hints corresponding to a web application according to the present invention first it is assumed that the web server CDS has at least a web application B at its disposal for delivery to any computing device at request of the meant web application B by the computing device. The meant web application B is stored at the storage means STM2 of the web server CDS.

Again, it is assumed that application B comprises a first and second script S1, S2.

A web server CDS generates the set of profile hints corresponding to the web application by processing each portion of said at least one script P1,.., P16 during said processing of said application.

The processor PROC2 of controller CNTR2, by means of the scripting engine included in processing means PROC2 of the web server CDS may generate a set of profile hints corresponding to a (web-) application by initially processing all portions P1,.., P16 of each of the scripts of such (web)-application and during the initial processing maintaining the number of times of processing each portion of the (web-) application. At first processor PROC2 by means of the scripting engine included in processing means PROC2, creates an object where the execution frequency of each function in the (set of) JavaScript Web resource(s) can be saved. It should be noted that the compiler of the web server CDS is already executing similar functionality since he needs to determine for which tier he needs to (re-)compile the code.

Initially, each execution frequency is set to zero. As soon as a function is called more than *threshold*_*function* times or any statement in that function is called more than *threshold_statement* times, the execution frequency for that function is incremented accordingly. At the end of processing such an (web)-application for each portion of the (web)-application a number of times of processing such portion is determined and based hereon an optimized kind of processing such portion of each is determined combined into a set of profile hints that correspond to the respective web application. The determined set of profile hints that correspond to the respective web application can be maintained separately or be stored in association with the respective (web-) application.

Alternatively, a distinct remotely located Profile Information generating device PIGD may generate a set of profile hints corresponding to a (web-) application by initially processing all portions of each of the scripts of such a (web-) application and during the initial processing maintaining the number of times of processing each portion of the (web-) application.

As a further alternative embodiment, a computing device CD' may generate a set of profile hints corresponding to a (web-)application by initially processing all portions of each of the scripts of such a (web-)application and during the initial processing maintaining the number of times of processing each portion of the (web-)application.

The data is maintained at the web server CDS, on a per Web application basis, and average the data among a number of different users. Once the threshold for that number of users is reached, the web Server will start delivering the averaged execution frequency together with the Web application. The web server CDS therefore adapts the JavaScript resources to include the averaged execution frequency. Each function in the JavaScript is e. g. preceded by its averaged execution frequency in comments. An example of such comment is illustrated in the next snippet where "ph-ef:1" means "the profile hint for the execution frequency of this function or for this statement has a value of one".
The set of profile hints corresponding to said Computer Application may comprise an annotation to each portion of the at least one script of the Computer Application.

Example of an annotation provided as a comment in the contents of a file "datedisplay. html":

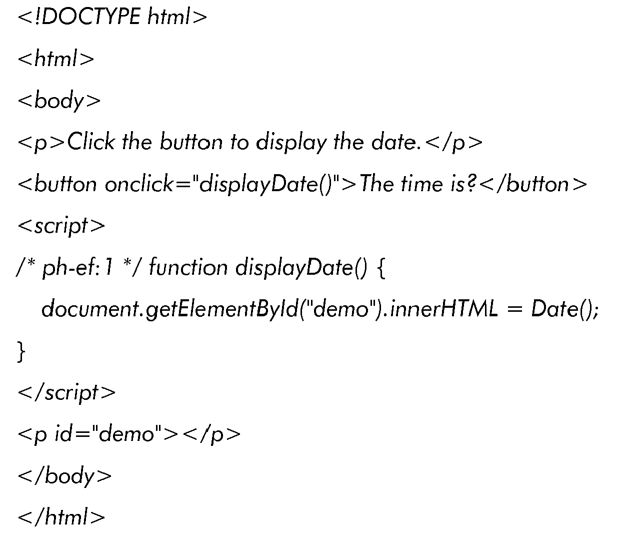

In the example above, the displayDate function "function *displayDate()* {}" inside the script section "<script></script>" of said file "datedisplay.html" is annotated with the comment /* ph-ef:1 */, said comment referring to a profile hint "ph" for "-" execution frequency "ef" with a value of ":" one "1".

Alternatively, the set of profile hints corresponding to said Computer Application may be provided as a separate resource file.

Example of a separate resource file "datedisplay.ph-ef" for said file "datedisplay.html"

### displayDate:1

In the example above, the displayDate function "displayDate" in the script section "<script> </script>" of the corresponding file "datedisplay.html" is marked with a profile hint for execution frequency "ph-ef" with a value of ":" one "1".

It is to be noted that a different set of profile hints may be generated for different form-factors of the computing device as a single computer application will most probably behave differently on a mobile phone as on a desktop computer. Hence, the set of profile hints may also be different for the different device form-factors.

Additionally it is to be noted that the profile hints may be coupled to user profiles or user profile categories. As such, the user profile or user profile categories can be used to select a profile hint between a set of profile hints previously obtained from a substantial set of users that is representative for the current user or user's profile.

Further, it is to be noted that although the embodiment describes a client-server architecture wherein the present invention is implemented and executed, this also could have been implemented and executed in a peer-to-peer architecture, cloud architecture, hardware architecture, and each other form in between.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for processing a Computer Application by a computing device (CD), said Computer Application comprising at least one script, each script comprising at least one portion, said method comprising the step of processing said at least one script said computing device (CD), said method comprising:
- processing, by said computing device (CD), each portion of said at least one script of said Computer Application, **CHARACTERIZED IN THAT** said method further comprises (the steps of):
- obtaining a set of profile hints corresponding to said Computer Application, by said computing device (CD), said set of profile hints comprising an indication on the kind of processing best suited for each portion of a script of said Computer Application based on the frequency of use of each portion of said at least one script during said processing of said Computer Application; and
- determining, by said computing device (CD), a kind of processing of said each portion of said at least one script of said Computer Application based on said set of profile hints corresponding to said Computer Application.

2. A method for processing a Computer Application according to claim 1, **CHARACTERIZED IN THAT** said Computer Application is a web application and **in that** method further comprises the step of:
- obtaining said web application by said computing device (CD) from a web server (CDS) said web application comprising at least one script.

3. A method for processing a Computer Application according to claim 1 or claim 2, **CHARACTERIZED IN THAT** said script comprises JavaScript.

4. A method for processing a Computer Application according to claim 1, **CHARACTERIZED IN THAT** said method further comprises:
- said computing device (CD) generating said set of profile hints corresponding to said Computer Application during said processing of each portion of a script of said Computer Application for the first time.

5. A method for processing a Computer Application according to claim 1, **CHARACTERIZED IN THAT** said method further comprises:
- a remote computing device (RCD) generating said set of profile hints corresponding to said Computer Application based on processing each portion of said at least one script during said processing of said Computer Application by said remote computing device.

6. A method for processing a Computer Application according to any of claims 1 to 5, **CHARACTERIZED IN THAT** said set of profile hints corresponding to said Computer Application comprises for each portion of the at least one script of the Computer Application a value indicating the kind of processing said portion of the at least one script of the Computer Application.

7. A method for processing a Computer Application according to any of claims 1 to 5, **CHARACTERIZED IN THAT** said set of profile hints corresponding to said Computer Application comprises an annotation to each portion of the at least one script of the Computer Application, each said annotation indicating said kind of processing of said portion of said at least one script.

8. A Computing device (CD) configured to process a Computer Application, said Computer Application comprising at least one script, each script comprising at least one portion, said computing device (CD) being configured to:
- process, each portion of said at least one script of said Computer Application, **CHARACTERIZED IN THAT** said computing device (CD) further is configured to:
- obtain a set of profile hints corresponding to said Computer Application, said set of profile hints comprising an indication on the frequency of use of each portion of said at least one script during said processing of said Computer Application; and
- determine a kind of processing of said each portion of said at least one script of said Computer Application based on said set of profile hints corresponding to said Computer Application.

9. A Computing device (CD) according to claim 8, **CHARACTERIZED IN THAT** said Computer Application is a web application and **in that** said Computing device (CD) further is configured to:
- obtain said web application from a web server (CDS) said application comprising at least one script, said web-server (CDS) being coupled to said computing device (CD).

10. A Computing device (CD) according to claim 8 or claim 9, **CHARACTERIZED IN THAT** said script comprises JavaScript.

11. A Computing device (CD) according to claim any of claims 8 to10, **CHARACTERIZED IN THAT** said computing device (CD) further is configured to:
- generate said set of profile hints corresponding to said Computer Application based on processing each portion of said at least one script during said processing of said Computer Application.

12. Web server (CDS), configured to provide a computing device (CD) with a web application, said computing device (CD) being coupled to said web server (CDS), said web application comprising at least one script, **CHARACTERIZED IN THAT** said web server (CDS), further is configured to:
- provide said computing device (CD) with a set of profile hints corresponding to said web application, said set of profile hints comprising an indication on the frequency of use of each portion of said at least one script during said processing of said web application.

13. Web server (CDS), according to claim 12, **CHARACTERIZED IN THAT** said web server (CDS) further is configured to:
- generate said set of profile hints corresponding to said web application based on processing each portion of said at least one script during said processing of said web application.

14. Remote computing device (RCD) for use in a method according to claim 5, **CHARACTERIZED IN THAT** said remote computing device (RCD) being configured to generate said set of profile hints corresponding to said Computer Application based on processing each portion of said at least one script during said processing of said Computer Application by said remote computing device.

15. Computer program product, preferably a computer readable storage medium (STM1, STM2, STM3) comprising a computer program that is programmed for executing a method according to any of the claims 1 to 4 when run on a processor (PROC1, PROC2, PROC3).
